(19) Europäisches Patentamt
European Patent Office
Office européen des brevets

(11) **EP 4 291 865 B1**

(12) **EUROPEAN PATENT SPECIFICATION**

(45) Date of publication and mention
of the grant of the patent:
**16.07.2025 Bulletin 2025/29**

(21) Application number: **21705476.6**

(22) Date of filing: **11.02.2021**

(51) International Patent Classification (IPC):
*G01M 11/02* *(2006.01)*

(52) Cooperative Patent Classification (CPC):
**G01M 11/0257; G01M 11/0271; G01M 11/0292**

(86) International application number:
**PCT/EP2021/053392**

(87) International publication number:
**WO 2022/171289 (18.08.2022 Gazette 2022/33)**

(54) **METHOD AND SYSTEM FOR CHARACTERIZING A FOCUSING OPTICAL ELEMENT**

VERFAHREN UND SYSTEM ZUR CHARAKTERISIERUNG EINES OPTISCHEN
FOKUSSIERUNGSELEMENTS

PROCÉDÉ ET SYSTÈME DE CARACTÉRISATION D'UN ÉLÉMENT OPTIQUE DE FOCALISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.12.2023 Bulletin 2023/51**

(73) Proprietor: **Max-Planck-Gesellschaft zur
Förderung der
Wissenschaften e.V.
80539 München (DE)**

(72) Inventors:
• **BANZER, Peter
8010 Graz (AT)**
• **EISMANN, Jörg
91361 Pinzberg (DE)**
• **NEUGEBAUER, Martin
91781 Weißenburg (DE)**

(74) Representative: **Tautz & Schuhmacher
Nibelungenstraße 84
80639 München (DE)**

(56) References cited:
**US-A- 6 111 646      US-A1- 2018 299 782**

**Description**

Embodiments of the invention relate to a method and a system for characterizing a focusing optical element and a method for characterizing a scattering element. Further embodiments of the invention relate to a use of a system for determining optical aberrations of the wave front of a light beam and/or for characterizing a microscope objective lens. The invention is, thus, related to the field of optical elements and their characterization.

US 2018/299782 A1 describes a device designed for analyzing the wavefront of at least one light wave passing through an optical system The device has at least one illumination mask, at least one first grating, at least one second grating arranged in the predefined plane and at least one detector for detecting said superimposition pattern. The at least one first grating has at least one first grating structure and generates an interferogram in a predefined plane from a wavefront to be analyzed which proceeds from the illumination mask and passes through the optical system. The at least one second grating has at least one second grating structure and generates a superimposition pattern by the superimposition of the second grating structure with the interferogram generated by the first grating.

US 6 111 646 A describes an alignment technique for calibrating a phase-shifting point diffraction interferometer which involves three independent steps where the first two steps independently align the image points and pinholes in rotation and separation to a fixed reference coordinate system. Once the two sub-elements have been properly aligned to the reference in two parameters (separation and orientation), the third step is to align the two sub-element coordinate systems to each other in the two remaining parameters using standard methods of locating the pinholes relative to some easy to find reference point.

For characterizing the wave front and/or optical aberrations of optical elements, such as microscope objective lenses, it is typically required to measure the wave front of an optical wave transmitted through the optical element under investigation. This is conventionally carried out by using interferometry or by using a particular type of sensor allowing to reconstruct the phase of the impinging optical wave, such as a Shack-Hartmann-Sensor (SHS). For this purpose, an incoming optical wave is typically transmitted through the optical element under test, which exhibits the aberrations of the optical element after propagating through the optical element.

Such measurements are comparative in nature, requiring a calibrated device acting as a benchmark to gain information about the object under test (see for instance P. Török et al., Optical Imaging and Microscopy, 2nd ed., Springer-Verlag, Berlin Heidelberg, Cambridge, 2007). Providing such a calibrated reference can be rather challenging, especially in the realm of modern technologies and methods demanding miniaturization and increasing resolution. A ubiquitous example is the measurement of optical elements based on the phase front of the transmitted light field. Usually this is done by interferometry, where a well-characterized optical reference element, e.g., a flat mirror or a beam splitter, is utilized to create a reference wave. Consequently, the quality of this element sets an upper limit for the measurement accuracy, because its defects translate directly into aberrations of the reference wave. Accordingly, having a reference optical element free of any aberrations is desirable, which however represents an ideal situation that is hard to achieve. Moreover, such a requirement merely transfers the problem of finding a way to characterize the optical aberrations of said reference optical element. Since also for this relative characterization a respective reference optical element is required, the problem remains unsolved.

It is, thus, desired to provide a method and a system for an absolute characterization of wave fronts of optical waves and/or optical elements without the need of an ideally aberration-free reference optical element.

This problem is solved by the methods, systems and uses having the features of the respective independent claims. Optional embodiments are presented in the dependent claims and the description.

One embodiment of the invention relates to a method for characterizing a focusing optical element. The method comprises transmitting a light beam through the focusing optical element such that the light beam is focused at a focal plane by the focusing optical element and collecting the focused light beam after the focal plane by a beam collection assembly and detecting the collected light beam by an image detector. The method further comprises providing a scattering element comprising or consisting of a nanoparticle between the focusing optical element and the beam collection assembly such that the light beam generates a scattered reference wave. The method comprises in addition collecting the focused light beam and at least a part of the scattered reference wave after the focal plane by the beam collection assembly and detecting the collected light beam and the collected reference wave by the image detector, wherein the detected light beam and the detected scattered reference wave partly overlap with each other at the image detector. Moreover, the method comprises determining an influence of the focusing optical element on a wave front of the transmitted light beam based on the detected light beam and the detected scattered reference wave.

Another embodiment of the invention relates to a system for characterizing a focusing optical element. The system comprises a beam collection assembly for collecting a light beam transmitted through and focused at a focal plane by the focusing optical element to be characterized, wherein the beam collection assembly is adapted to collect the focused light beam after the focal plane. The system further comprises a scattering element comprising or consisting of a nanoparticle, wherein the scattering element is arrangeable in the light beam between the focusing optical element and the beam collection assembly such that the light beam generates a scattered reference wave and wherein the scattering element is removable from the light beam. Moreover, the system comprises an image detector for detecting the collected light beam and at least a part of the optionally generated scattered reference wave, wherein the detected scattered reference wave and the light beam partly overlap with each other at the image detector. The system further comprises a computing unit which is adapted to determine an influence of the focusing optical element on a wave front of the transmitted light beam based on the detected light beam and the detected partly overlapping scattered reference wave.

Yet another embodiment of the invention relates to a use of a system according to an embodiment of the invention for determining optical aberrations of the wave front of the light beam caused by the focusing optical element to be characterized when transmitting the light beam through the focusing element.

Yet another embodiment of the invention relates to a use of a system according to an embodiment of the invention for characterizing a microscope objective lens.

Yet another embodiment of the invention relates to a method for characterizing a scattering element. The method comprises transmitting a light beam through a focusing optical element such that the light beam is focused at a focal plane by the focusing optical element. The method further comprises collecting the focused light beam after the focal plane by a beam collection assembly and detecting the collected light beam by an image detector. The method further comprises providing the scattering element to be characterized between the focusing optical element and the beam collection assembly such that the light beam generates a scattered sample wave. Moreover, the method comprises collecting the focused light beam and at least a part of the scattered sample wave after the focal plane by the beam collection assembly and detecting the collected light beam and the collected sample wave by the image detector. The method comprises in addition determining an influence of the scattering element arranged in the light beam on a wave front of the transmitted light beam based on the detected light beam and the detected scattered sample wave.

A focusing optical element is an optical element, such as a lens or microscope objective lens, having a refractive and/or diffractive power. The focusing optical element has a focusing or defocusing effect on an optical wave transmitted through the optical element. This focusing element has a focus in a focal plane being outside of the optical element, such that the focal plane is accessible at the outside of the optical element. The optical element may for instance consist of one single lens or mirror or may comprise a plurality of lenses and/or mirrors. In an optional embodiment, the optical element may be an objective lens comprising an assembly of several lenses or other types of optical elements. Without limiting the invention, the objective lens may be an objective lens for a microscope and/or for photography and/or for a video camera.

The terms optical wave, light wave, light beam, and optical beam are used as synonyms throughout this text, unless explicitly stated otherwise. The wave front is regarded as the phase front of the optical wave, i.e., the spatial distribution of the light wave's phase over the transversal profile of the light wave.

Collecting the focused light beam according to the description may include collimating the divergent light beam after the focus. Collecting the light beam may further comprise controlling the size of the light beam and/or imaging the light beam to a desired plane for further use. Accordingly, the beam collection assembly may comprise one or more optical elements for collimating and/or reshaping and/or imaging the light beam, such as a collimating optical element. The beam collection assembly may consist of a single optical element or may comprise a plurality of optical elements. According to an embodiment of the invention, the method comprises collecting the focused light beam without a scattering element and also collecting the focused light beam together with the scattered reference wave generated by the scattering element. In the latter case, the light beam and the scattered reference wave are collected simultaneously.

The image detector is a detector for detecting the light beam. The light beam may be imaged to the image detector, although such an imaging is not necessarily required. The image detector may be adapted to detect a spatial (transversal) intensity distribution of the light beam and optionally of an interference of the light beam with the scattered reference wave. For instance, the image detector may comprise a one-dimensional and/or a two-dimensional array of detector elements, such as a CCD array and/or a CMOS array. Without limiting the invention, the image detector may be adapted as a camera, in particular a digital camera. The image detector by itself is not required to retrieve any information regarding the phase of the wave front or parts of the wave from. Accordingly, it is not required to provide the image sensor as an SHS. Alternatively, or additionally the image detector is not required to provide any information regarding the polarization type and/or direction of the detected light beam. Instead, it may be sufficient for the image detector to detect the spatial intensity distribution of the light beam and the optionally interfering scattered reference wave.

A scattering element is an element provoking scattering of at least a part of the light beam when irradiated by the light beam. The scattering ability of the scattering element may be most efficient when placing the scattering element at the position where the light beam has a high intensity, such as in the focus of the light beam. The scattering element may be adapted to have a particularly high scattering cross section at the central wavelength of light beam. The scattering element may be adapted to the light beam with respect to its size and/or shape and/or material characteristics. The scattering element may consist of or comprise a nanoparticle, in particular a silicon nanoparticle and/or a metal nanoparticle.

The scattered reference wave is an optical wave generated by the scattering element due to scattering of at least a part of the light beam. Being a reference wave means that the scattered reference wave is used as a reference with respect to the optical wave or light beam transmitted through the focusing optical element under test.

The detected light beam and the scattered reference wave partly overlapping with each other at the image detector means, that the detected light beam and the scattered reference wave are at least partly detected by the image detector, wherein a part of the image solely relates to the scattered reference wave without the light beam overlapping it, and wherein other parts of the detected image relate to the scattered reference wave and the light beam overlapping each other and interfering with each other.

The invention provides the advantage that methods and systems for characterizing a focusing optical element can be provided circumventing the need for an aberration-free optical element. In other words, when using the invention, it is not required to use a reference optical element having no or only well-known optical aberrations for characterizing a focusing optical element under test. Therefore, major limitations for characterizing focusing optical elements are set aside, since there is no need of providing on aberration-free or extremely well-characterized reference optical element. This is in particular achieved by using the scattering element between the focusing optical element in the beam collection assembly. The scattering element provides the required reference wave, which is used as a reference to be compared with the light beam carrying the aberrations of the focusing optical element under test. Since the scattering element is provided only after the focusing optical element on the investigation, the generated scattered reference wave is not transmitted through the focusing optical element under test and, thus, does not exhibit the aberrations of the focusing optical element under test. Instead, the scattered reference wave generated by the scattering element scattering a part of the light beam allows generating a well-defined reference wave, which may be adapted to the specific individual needs by selectively choosing and adapting the used scattering element to the requirements and purposes of the measurement. Moreover, the scattered reference wave is being collected by the beam collection assembly in the very same manner as the light beam transmitted through the focusing optical element under test. This ensures that possible aberrations imposed onto the light beam when transmitted through the beam collection assembly are likewise imposed onto the scattered reference wave and therefore are canceled out when determining the influence of the focusing optical element on the wave front of the transmitted light beam. Hence, only those aberrations of the light beam, which are imposed onto the light beam by the focusing optical element affect the relative comparison of the light beam with the scattered reference wave, since all of the possible aberrations affect the scattered reference wave in the light beam in the same manner and, thus, are canceled out or maybe separated during the evaluation.

In addition, the invention provides the advantage that no phase-sensitive detector, such as Shack-Hartmann-sensor (SHS) is required for characterizing the focusing optical element and its aberrations imposed on to the transmitted light beam. Accordingly, the system requirements, the complexity and/or the costs of such a system for characterizing focusing optical element may be kept at a low level. This facilitates manufacturing and/or use and allows its application in cost sensitive applications.

Moreover, the invention provides the advantage that the generated scattered reference wave may be adapted and/or optimized to the individual requirements of each measurement and/or focusing optical element to be characterized. Such an adaptation and/or optimization may be realized by varying the scattering element. For example, a scattering element may be varied with respect to its size and shape and/or material composition to have a desired scattering cross section and/or a desired emission of specific multipole orders of the scattered reference wave for the intended use.

In addition, embodiments of the invention provide the advantage that the method and system may be used with a well-known and well-characterized focusing optical element to characterize an unknown scattering element. Characterizing a scattering element in this context means that one or more parameters of the scattering element are determined. However, the characterization of the scattering element does not necessarily mean a formal characterization of all physical parameters of the scattering element under test, such as a nanoparticle. For this purpose, the generated scattered wave may be used as a scattered sample wave to characterize the scattering element. In particular, the method may allow determining the far-field emission of the scattered wave generated by the scattering element and the light beam. It may thus provide information about the multipole orders of the generated scattered wave and consequently about the size and/or shape and/or material composition of the scattering element under investigation. The scattering element to be characterized may be a nanoparticle.

According to an optional embodiment the scattering element is consecutively placed at different transversal positions of the light beam, wherein the collected light beam and at least the part of the scattered reference wave is detected for each transversal position of the scattering element. This allows generating different scattered reference waves due to the different transversal positions of the scattering element. Moreover, the scattering efficiency can be varied by varying the transversal position of the scattering element with respect to the focal axis.

According to an optional embodiment, the scattering element is arranged within an accessible focal volume. According to a further optional embodiment, the scattering element may be arranged within a longitudinal distance from the focal plane being equal to or less than the Rayleigh range of the focused light beam. According to yet another optional embodiment, the scattering element is arranged in the focal plane or within a longitudinal distance of $\pm 2\,\mathrm{mm}$ from the focal plane. The smaller the longitudinal distance of the scattering element from the focal plane, the higher the intensity of the focused beam may be, which is experienced by the scattering element, if the scattering element is arranged at the optical axis of the focused light beam. The higher the local intensity experienced by the scattering element, the higher the scattering will be and consequently the higher the power of the generated scattered reference wave will be. Typically, for many beam profiles the intensity is the highest at the focal point of the system. Therefore, according to an optional embodiment the scattering element may be arranged in or close to the focal point. Optionally, the scattering element is arranged with a longitudinal distance of not more than 1 $\mu$m from the focal plane. This ensures a high scattering strength and, thus, a strong scattering wave generated by the scattering element which allows achieving a high signal-to-noise ratio.

According to an optional embodiment the scattering element is adapted such that the reference wave generated by the light beam essentially consists of predetermined orders of electric and/or magnetic multipole radiation. This facilitates determining and/or estimating and/or fitting the scattered reference wave detected by the image detector. Since determining and/or estimating and/or fitting the scattered reference wave may include reconstructing the wave front of the scattered reference wave by means of calculations, good knowledge of or justified assumptions about the electric and/or magnetic multipole radiation, of which the scattered reference wave consists of, may facilitate the reconstruction process. Consequently, this facilitates determining the influence of the focusing optical element on the wave front of the transmitted light based on the detected light beam in the detected scattered reference wave. The scattering element may be adapted with regard to its size and/or shape and/or material properties to generate a scattered reference wave essentially consisting of predetermined orders of electric and/or magnetic multipole radiation.

Optionally, the scattering element is adapted such that the reference wave generated by the light beam essentially corresponds to electric dipole radiation and optionally electric quadrupole radiation and optionally magnetic dipole and/or quadrupole radiation. Restricting the reference wave to said orders facilitates its reconstruction, in particular by fitting the reference wave by means of calculations.

According to an optional embodiment, several different scattering elements are used in consecutive measurements for generating the reference wave. This allows generating several different scattered reference waves for consecutive measurements. Optionally said differences between the reference waves essentially correspond to different electric and/or magnetic multipole radiation patterns. Therefore, using several different scattered reference waves in consecutive measurements may allow retrieving an influence of the focusing optical element on the wave front of the transmitted light beam in a more reliable manner. In particular, the influence of possible deviations of the reconstructed and/or fitted scattered reference wave from the actual wave front of the scattered reference wave may be reduced when using several different scattered reference waves in consecutive measurements.

According to an optional embodiment, collecting the focused light beam and optionally at least the part of the scattered reference wave comprises collimating the light beam and optionally imaging the light beam to the image detector. This may allow for collecting all or most of the focused light beam and the scattered reference wave and providing them to the image detector. Accordingly, a high signal to noise ratio may be achieved. The beam collection assembly may comprise a collimating optical element and optionally one or more imaging optical elements. According to an optional embodiment the collimating optical element is a microscope objective lens and optionally an immersion type microscope objective lens. According to a further optional embodiment the collimating optical element may be of the same or a similar type as the focusing optical element on the investigation. For instance, the focusing optical element under investigation and the collimating optical element may both have large numerical apertures. For example, the focusing optical element may be a dry microscope objective lens having a numerical aperture of 0,9, while the collimating optical element may be an immersion type objective lens having a numerical aperture of 1,32. The collimating optical element having a larger numerical aperture than the focusing optical element may ensure providing a second region of the detected image, in which the detected scattered reference wave is not overlapped by the collimated light beam transmitted through the focusing optical element under test.

According to an optional embodiment, the light beam is provided with a predetermined polarization. Optionally the light beam is provided in consecutive measurements with different predetermined polarizations. This allows retrieving additional information with regard to the influence of the focusing optical element on the polarization of the transmitted light beam. Moreover, this may allow retrieving additional information with respect to the polarization when using a scattering element generating a scattered reference wave having an isotropic behavior with regard to the polarization of the generated scattered reference wave.

According to an optional embodiment, collecting and detecting the focused light beam and at least a part of the scattered reference wave is carried out such that a first region of an image detected by the image detector corresponds to an overlap of the light beam and the reference wave and a second region of the image detected by the image detector essentially corresponds only to a part of the reference wave. This allows a clear separation of different areas of the detected signal, in which the scattered reference wave and the light beam are overlapping and in which solely the scattered reference wave generates the detector signal, respectively. Accordingly, the second region of the image detected by the image detector may serve the purpose of characterizing and/or determining and/or reconstructing and/or fitting the scattered reference wave, i.e., the intensity distribution and/or phase distribution of the scattered reference wave over its profile. The first region of the image detected by the image detector may then serve the purpose of determining the influence of the focusing optical element on the transmitted light beam interfering in the first region of the image with the reconstructed and/or fitted scattered reference wave. Determining the influence of the focusing optical element on the wave front of the transmitted light beam may include determining an intensity distribution of the first part of the image detected by the image detector and determining an intensity distribution of the second part of the image detected by the image detector. The method may further include fitting a calculated far-field emission of multipole radiation to an intensity distribution of the second region of the image detected by the image detector for characterizing the reference wave. Therefore, this scattered reference wave, i.e., its far-field emission may be reconstructed based on the second region of the image and the influence of the focusing optical element on the transmitted light beam may be determined on the first region of the image. Thus, the reconstruction and/or fitting of the scattered reference wave and its far-field emission can be based on a part of the image detected by the image detector, which is not influenced by the focusing optical element, its aberrations, and the transmitted light beam and, thus, possibly undesired influences can be avoided. This leads to a high reliability and robustness of the method for characterizing the aberrations of the focusing optical element.

According to an optional embodiment the scattering element comprises or consists of a nanoparticle, wherein the nanoparticle is optionally supported by a transparent substrate. The scattering element may be selected to be suitable for the (central) wavelength of the light beam used for the characterization method and/or to be adapted to the fitting process for retrieving the intensity and/or phase distribution of the scattered reference wave. In particular, the scattering element may be chosen such as to have a suitable and optionally large scattering cross section at the wavelength of the light beam used for the measurement and may be chosen such as to have a far-field emission of scattered light comprising or consisting of predetermined and known multipole orders, in particular predetermined and known low multipole orders, such as dipole and quadrupole modes.

In other words, the particle optionally supports only very few multipole orders. This reduces the number of free parameters required for the retrieval and fitting of the intensity and phase distribution of the scattered reference wave. Consequently, this improves the reliability and accuracy of the method. The number of multipole orders comprised by the far-field emission may be reduced by reducing the size and/or changing the shape of the scattering element.

Furthermore, the scattering element optionally has a large scattering cross section, which may be chosen as large as possible. This improves the signal-to-noise ratio and, thus, the accuracy of the characterization method. This is due to the reconstruction of the phase of the light beam being based on the interference between the light beam and the scattered reference wave. The scattering cross section can be increased by increasing the size of the scattering element. Since this requirement contradicts the previous requirement regarding the multiple orders, a compromise may have to be found. Therefore, the size of the particle should be chosen large enough to exhibit a sufficient scattering cross section and at the same time small enough to limit the far field emission to only few multipole orders.

A further parameter for optimizing the scattering cross section may be the material composition of the scattering element. Typically, nanoparticles may be a suitable choice for the scattering element. For example, gold nanoparticles, which may have a spherical shape and a radius between 40 and 70 nm may be a suitable choice for measurements with a light beam having a wavelength in the range of 500 to 700 nm. Such spherical gold nanoparticles may be advantageous, since they mostly support electric dipole radiation.

Another suitable choice for scattering elements may be silicon nanoparticles, due to their suitability for a very broad wavelength range, since their resonance wavelength may be tuned over a wide range by varying the radius of the spherical silicon nanoparticles. Although silicon nanoparticles support the emission of magnetic dipole radiation in addition to electric dipole radiation, such particles may be a suitable choice due to their typically larger scattering cross section as compared gold nanoparticles. Just for the sake of providing an example, a spherical silicon nanoparticle having a radius of 70 to 80 nm may be well suited for measurements in the wavelength range of 500 to 750 nm. A spherical silicon nanoparticle having a radius of 200 nm may be a suitable choice for measurements in the wavelength range of 1.250 to 2.000 nm.

One or more scattering elements, such as nanoparticles, may be provided on a glass slide or glass substrate allowing a convenient positioning of the scattering element in the focus of the light beam. Needless to say, that the glasslike or any other used substrate has to be transparent for the light beam. For instance, the one or more scattering elements may be provided on the glass slide by a lithographic process. Optionally, several different or identical scattering elements may be provided on a substrate. A large number of scattering elements provided on the substrate may facilitate the arrangement of one scattering element in the focus, since it is not necessary to arrange one particular scattering element into focus. However, the several scattering elements should have a sufficiently large distance between each other, such that only one scattering element may be arranged in the focus at a time without any one of the other scattering elements interfering with the light beam. According to an optional embodiment several scattering elements are provided on the substrate forming a regular arrangement, such as a grid, which may facilitate arranging one of the scattering elements in the focus. Such grids or any other arrangements of several scattering elements in the substrate may be provided in a lithographic process. Moreover, a substrate may comprise various different scattering elements, which may differ with regard to their scattering cross section and/or their resonance wavelengths and/or their multipole orders of their far field emission.

It is understood by a person skilled in the art that the above-described features and the features in the following description and figures are not only disclosed in the explicitly disclosed embodiments and combinations, but that also other technically feasible combinations as well as the isolated features are comprised by the disclosure of the invention. In the following, several preferred embodiments of the invention and specific examples of the invention are described with reference to the figures for illustrating the invention without limiting the invention to the described embodiments.

Further optional embodiments will be illustrated in the following with reference to the drawings.

Figures 1 depicts a system for characterizing a focusing optical element according to an optional embodiment of the invention.

Figures 2A and 2B show intensity profiles taken according to a method according to an optional embodiment.

Figure 3 depicts images taken according to a method according to an optional embodiment together with the reconstruction of the phase distribution of the light beam.

In the drawings the same reference signs are used for corresponding or similar features in different drawings.

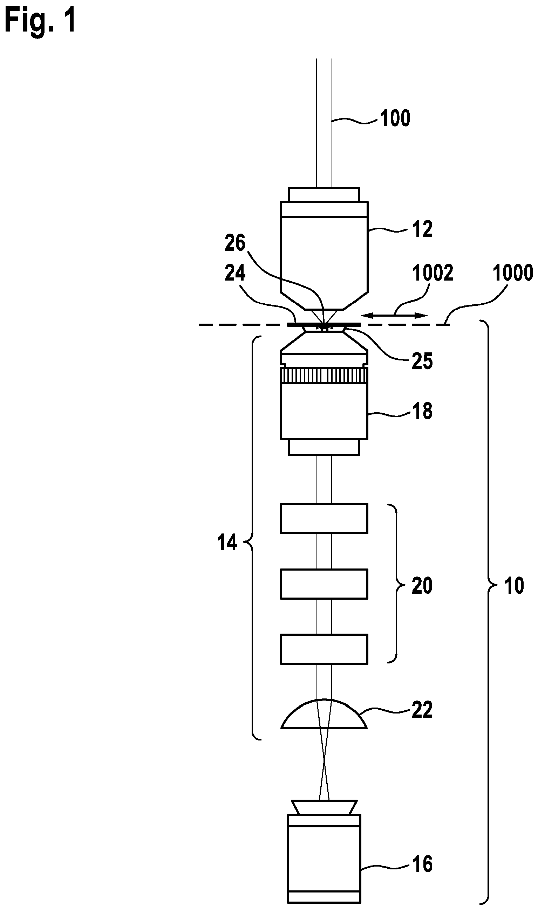

Figure 1 depicts a system 10 according to an optional embodiment for characterizing a focusing optical element 12. The focusing optical element 12 interacts with the system 10 but does not form part of the system 10.

The system 10 serves the purpose of characterizing the focusing optical element 12 with respect to possible aberrations imposed on the light beam 100 transmitted through the focusing optical element 12. According to the present embodiment the focusing optical element 12 is a microscope objective lens. The focusing optical element 12 under test focuses a light beam 100 coupled into the focusing optical element 12 into a focal plane 1000.

The system 10 comprises a beam collection assembly 14 for collecting and collimating the divergent and previously focused light beam 100 and transmitting the light beam 100 to an image detector 16 forming part of the system 10. According to the presented embodiment the beam collection assembly 14 comprises several further optical elements, wherein one of these optical elements is a collimating element 18 for fully or partly collimating the divergent light beam 100 after the focus in the focal plane 1000. The beam collection assembly 14 according to the presented embodiment further comprises additional optional optical elements 20 for an optional polarization analysis of the light beam 100, such as liquid crystal variable retarders and a linear polarizer. The beam collection assembly 14 finally comprises an imaging lens 22 for imaging the back focal plane of the collecting optical element 18 to the image detector 16 to retrieve the angular distribution of the collected signal.

According to the presented embodiment the image detector 16 is adapted as a digital camera having a two-dimensional array of sensor pixels for detecting a spatial intensity distribution.

Moreover, the system 10 comprises a scattering element 24 arranged between the focusing optical element 12 and the beam collection assembly 14 in the focal plane 1000 or close to it. According to the preferred embodiment the scattering element 24 comprises a nanoparticle, which generates a scattered reference wave 26 when irradiated with the focused light beam 100. As indicated in figure 1, the scattering element 24 may be supported by a transparent slide, such as a glass slide, which allows arranging the scattering element 24 at the desired position in the focal plane 1000 and optionally directly in the focus or adjacent to it to generate a scattered reference wave 26. The reference sign 24 indicates the supporting transparent slide, since individual nanoparticles forming the actual scattering elements 24 are too small to be presented in this schematic sketch. The space between the glass slide and the collecting optical element may be filled with an immersion oil 25.

Scattered reference wave is indicated in the figure by the area marked with a reference sign 26. This scattered reference wave 26 extends from the scattering element 24 arranged in or close to the focus of focal plane of the light beam 100 and is at least partly collected and collimated by the collimating optical element 18 of the beam collection assembly 14. Accordingly, when the scattering element 24 is arranged in the light beam 100, in particular in the focus of the light beam 100, this scattered reference wave 26 is generated and transmitted through the beam collection assembly 14 together with the collected and collimated light beam 100. It is to be noted that this scattered reference wave 26 is generated only in the focus after the focusing optical element 12 under test and therefore is not subject to possible optical aberrations of the focusing optical element 100 under test.

According to the presented embodiment the collimating optical element 18 has a higher numerical aperture than the focusing optical element 12 under test. This allows for collecting and collimating parts of the scattered reference wave 26 having a larger divergence than the divergent light beam 100 after the focus. The beam collection assembly 14 and the image detector 16 are adapted to image the transmitted light beam 100 and the overlapping scattered reference wave 26 to a first region of the image detected by the image detector 16 and in addition image and additional part of the scattered reference wave 26 to a second region of the image detector 16 not overlapping with the light beam 100. Said part of the scattered reference wave 26 imaged to the second region of the detected image may be that part of the scattered reference wave 26 collected and collimated by the outer area of the collimating optical element 18 exceeding the numerical aperture of the focusing optical element 12 under test. Accordingly, the larger the difference between the numerical apertures of the collimating optical element 18 in the focusing optical element 14, the larger the second region of the detected image corresponding solely to the reference wave 26 is.

For characterizing the focusing optical element 12, images may be detected with and without the scattered reference wave overlapping the detected light beam 100 on the detector 16. This may be achieved in consecutive measurements, wherein the measurement with the scattered reference wave 26 overlapping the light beam 100 may be carried out with the system 10 as described above, and therein the measurement of the light beam 100 without the scattered reference wave 26 overlapping may be carried out in a separate measurement with the scattering element 24 being removed from the focus and the light beam 100. This may be achieved for instance by moving the transparent slide carrying the scattering element 24 at least partly parallel to the focal plane to move the scattering element 24 out of the focus, as indicated by arrow 1002.

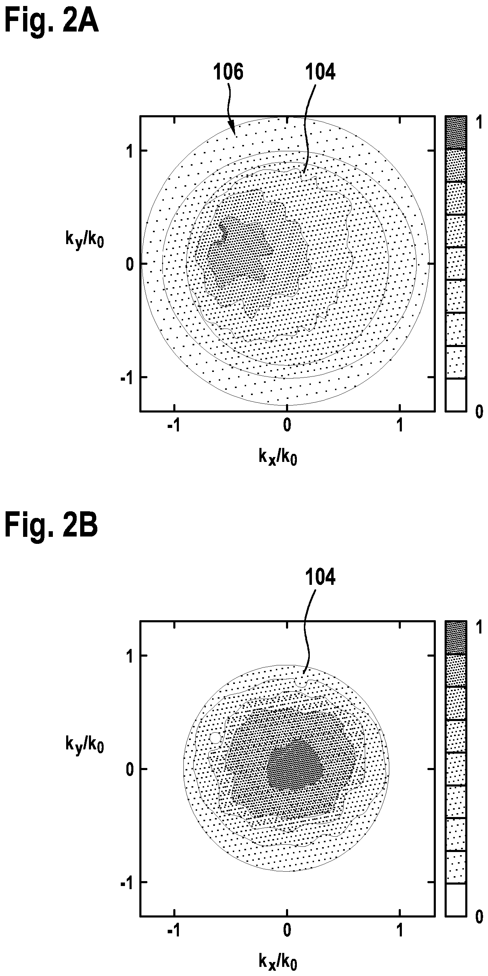

With reference to Figures 2A and 2B a method for characterizing a focusing optical element 12 according to an optional embodiment is described. The method according to the presented embodiment uses a system 10, as presented with reference to Figure 1. The method uses a nanoparticle as a scattering element 24, which is placed in the focal plane of the focusing optical element 12 and the collimating optical element 18, which both share the same focal plane 1000. The scattering element 24 can be removed from the focus and/or the light beam 100 to carry out measurements without the scattering element 24 arranged in the focus and the light beam 100.

The method further comprises optional polarization measurements which are performed by controlling liquid crystals, which form part of the additional optical elements 20 of beam collection assembly 14. For example, various measurements may be carried out for linear polarization having polarization angles of 0°, 45°, 90° and 135°, as well as for left- and right-handed circular polarization.

For each of the polarizations an image is detected of the light beam 100 and the scattered reference wave 26 collected and collimated by the beam collection assembly 14 and imaged to the image detector 16. Afterwards the scattering element 24 is removed from the focus and the light beam 100 and the measurements are repeated. The order of carrying out the measurements may be changed or reversed.

The measurements and the changes of the system 10 between the individual measurements are carried out in an automated manner, i.e., the change of the polarization controlling optical elements and/or the removal or inserting of the scattering element into the focus are carried out in an automated manner.

Figure 2A schematically illustrates the image detected by the image detector 16 for measurements when the scattering element 24 is placed in the focus of the light beam 100 and generates the scattered reference wave 26. The focusing optical element 12 under test is a microscope objective lens of the type LEICA HCX PL FLUOTAR 100x/0.9. The used collimating optical element 18 is a microscope objective lens of the type LEICA HCX FLUOTAR 100x/1.32 OIL. Accordingly, the detected image represents an intensity distribution of the light beam 100 and the scattered reference wave 26 at a detection plane of the image detector 16, which corresponds to an angular distribution of the light beam 100 and the reference wave 26 after the focus. The light beam 100 is a Gaussian beam having a central wavelength of 680 nm, a spectral width $\Delta\lambda \approx 5\ nm$ and a beam waist $w_0 = 3\ mm.$ The detected image comprises a first region 104 in the center of the detected image and a second region 106 surrounding the centered first region 104. The first region 104 corresponds to an intensity distribution, in which the light beam 100 and the scattered reference wave 26 are overlapping and interfering, which results in the intensity distribution of the first region 104. The second region 106 originates solely from the scattered reference wave 26, which has a larger divergence than the light beam 100 after the focus and therefore spreads around the central first region 104 in the detected image. As can be seen, the intensity of the light beam in the first region 104 exceeds the intensity of the scattered reference wave 26 in the second region by far.

However, the isolated image of the scattered reference wave 26 in the second region 106 allows fitting and/or reconstructing the whole profile of the scattered reference wave 26, as will be explained in detail further below.

The image in Figure 2B shows the intensity distribution of the light beam 100 without an overlapping scattered reference wave 26. This image was taken with the scattering element 24 removed from the focus and the light beam 100 such that no scattered reference wave is generated. This allows detecting solely the light beam 100 with the image detector without an overlapping reference wave.

In the following, a retrieval of the phase front of the light beam 100 and the determination of the influence of the focusing optical element on a wave front of the transmitted light beam according to an optional embodiment are described.

When measuring with the scattering element 24 in the focused light beam 100, the first region 104 of the intensity profile shows the interference between the transmitted light beam 100 and the scattered reference wave 26 generated by the scattering element 24. When the scattering element 24 is not placed in the focus and the light beam 100, the intensity profile of the light beam 100 is measured without the reference wave 26 overlapping.

For retrieving the phase front of the scattered reference wave 26 in the central first region 104, the far-field emission of dipoles is calculated for an emitter, i.e., a scattering element 24, placed on a glass substrate. Theoretical far-fields are fitted to the outer second region 106 of the detected image where only the scattered reference wave 26 is recorded. According to the presented optional embodiment, for these fits, the amplitudes and phases of the multipole contributions, which are in the present case limited to dipole contributions, serve as free parameters. A full set of Stokes parameters may be measured before and provided in order to prevent ambiguities during the identification of the generated dipole moments. The distance of the scattering element 24 above the surface is determined by a fit as well. The distance of the scattering element 24 from the surface of the glass slide may correspond to the radius or half thickness of the scattering element. Once the fit has converged, the retrieved parameters can be used to calculate the emission of the excited dipole moments to the whole three-dimensional space. In our case, we are especially interested in calculating the emission in the central first region 104 of the detected image. Knowing the dipole moments allows calculating the far-fields also in the central first region, i.e., in the region covered by the numerical aperture of the focusing optical element 12 under test, where interference with the transmitted light beam 100 is observed.

At this point we now have the following information in the inner region of the detected image:

$I_1$, which indicates the intensity distribution of the transmitted light beam 100;
$I_2$, which indicates the intensity distribution of the scattered reference wave 26;
$I_{tot}$, which indicates the resulting intensity distribution of the interference of components $I_1$ and $I_2$.

Furthermore, the phase distribution of the scattered reference wave $\varphi_2$ is known, as the scattered light in the central fist region 104 of the detected image was calculated from the fitted dipole moments and therefore contains full amplitude and phase information. Using the following standard equation for two interfering light fields

$$(1) \qquad I_{tot} = I_1 + I_2 + 2\sqrt{I_1 I_2} \cdot \cos(\varphi_1 - \varphi_2)$$

we can see that the only unknown component in equation (1) is $\varphi_1$, which indicates the phase distribution of the light beam 100, which therefore can be calculated easily.

In other words, the exact information including intensity $I_2$ and phase $\varphi_2$ distributions of the scattered reference wave is used for the characterization of the focusing optical element 12.

It is emphasized that the focusing optical element 12 under test is the only optical element, through which the light beam 100 is transmitted but the scattered reference wave is not transmitted. The light beam 100 and the scattered reference wave 26 are transmitted through all optical elements of the system 10 in an equal manner. This bears the significant advantage that possible aberrations, which are possibly caused by the optical elements of the system 10 equally affect the light beam 100 and the scattered reference wave. Thus, the only aberrations affecting the light beam 100 but not the scattered reference wave 26 essentially originate in the focusing optical element 12 under test. Consequently, the system 10 and method allow an undistorted characterization of the focusing optical element 12 under test. Therefore, the system is invariant to phase distortions of all other subsequent components in the system.

As a further optional step, the lowest order Zernike polynomials (piston, tip, tilt, defocus) may be fitted and subtracted from the calculated distributions, as these contributions are of minor importance for the characterization of the focusing optical element 12 under test. These contributions can be influenced and/or corrected by tilting and/or moving the focusing optical element 12 and therefore usually are not considered as an aberration caused by the focusing optical element 12.

The method for characterizing the focusing optical element 12 may be partly or fully automated. For instance, the method may be carried out by a computer program. The computer program may, for instance, be configured to include one or more of the following functionalities: controlling a piezo table for controlling the position of the scattering element, controlling a light source, recording data provided by the image detector and/or possible further sensors; controlling a voltage applied to optional liquid crystal cells for polarization analysis; triggering the image detector.

The evaluation of the detected image may also be automatedly carried out by a computer program. For example, the computer program may be written with a conventional mathematical programing environment, such as MATLAB.

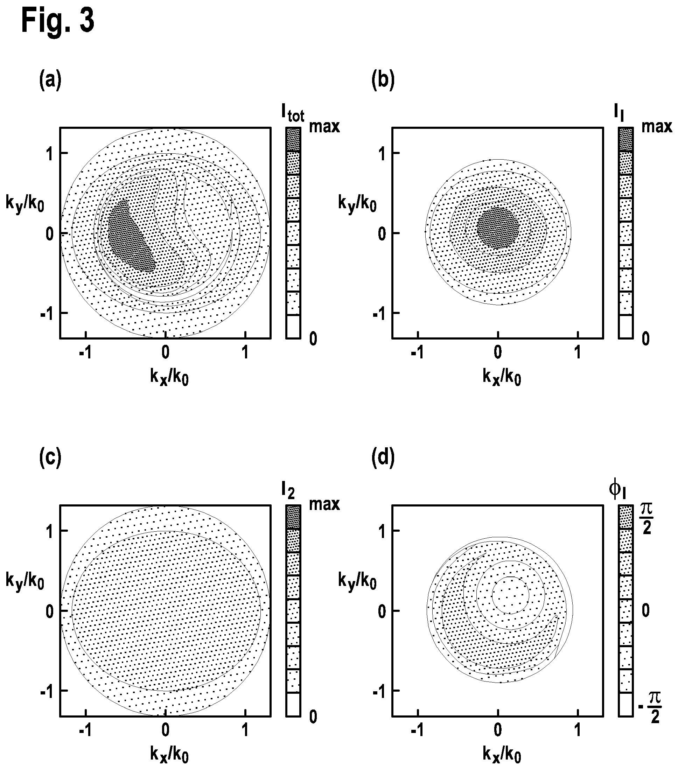

Figure 3 exemplarily indicates detected images for the characterization of a microscope objective lens as the focusing optical element 12 under test. For the measurement, a laser beam having a central wavelength of 680 nm was selected as light beam 100. The scattering element 24 is provided as a spherical silicon nanoparticle having a radius of 76 nm attached to a glass slide. The sections of Figure 3 depict the detected image of the intensity profile with the scattering element 24 placed in the focus of the light beam 100 (section a) and with the scattering element 24 removed from the focus and the light beam 100 (section b). Section c) indicates calculated emission pattern for the retrieved dipole moments, i.e., the retrieved intensity distribution of the scattered reference wave by calculation Section d) depicts the reconstructed phase distribution of the k-spectrum of the light beam 100 as focused by the microscope objective lens, which is the focusing optical element 12 under investigation. For illustrative purposes, the lowest order Zernike polynomials (Piston, Tip, Tilt, Defocus) are fitted and subtracted. Section d) clearly shows a crescent-shaped deformation of the phase front indicating the presence of aberrations induced by the microscope objective lens. This explains the corresponding distortion of the total intensity $I_{tot}$ as illustrated in section a), although the individual intensity distributions $I_1$ of the light beam 100 and $I_2$ of the scattered reference wave 26 look rather symmetric (see sections b) and c)).

According to the presented embodiment, a nanoparticle was chosen as the scattering element 24 emitting a scattered wave essentially corresponding to a dipole far-field emission. However, according to other embodiments different scattering elements may be chosen, which may comprise an emission including other multipole orders. The preferred multipole modes of the emission of the scattering element may be considered when fitting the intensity and/or phase distribution of the scattered reference wave. Selecting a scattering element having a known and predetermined emission comprising or consisting of predetermined multipole orders may facilitate the fitting process and reduce ambiguities. Keeping the multipole orders low, i.e., restricted to dipole and optionally to quadrupole orders, may have the benefit of reducing the required computational effort for the fitting process.

It should be noted that this method is not restricted to the chosen wavelength. Although for a fixed nanostructure the potential spectral range may be limited, by using particles of other sizes, the available range can span the whole visible and near-infrared spectrum. Furthermore, it is also not necessary to use a perfectly spherical nanoparticle, since this procedure is capable of identifying arbitrary combinations of dipoles. As long as the scattering element features a reasonably strong dipole response and simultaneously suppress higher order multipoles, it is possible to use almost arbitrarily shaped nanostructures. As an example, metal cylinders (e.g., made from gold etc.) may be used as an alternative to the spherical nanoparticles. Using modern lithography, cylindrical nanostructures can be fabricated easily in arrays including different sizes, hence providing a full range of different probes on a single sample to cover and measure over a wide spectral range.

**List of reference signs**

| | |
|---|---|
| 10 | system for characterizing a focusing optical element |
| 12 | focusing optical element |
| 14 | beam collection assembly |
| 16 | image detector |
| 18 | collimating optical element |
| 20 | (optional) additional optical elements |
| 22 | imaging lens |
| 24 | scattering element (attached to glass slide) |
| 25 | immersion oil |
| 26 | scattered reference wave |

| | |
|---|---|
| 100 | light beam |
| 104 | first region of image |
| 106 | second region of image |

| | |
|---|---|
| 1000 | focal plane |
| 1002 | sliding direction for removal of scattering element |

**Claims**

1.  Method for characterizing a focusing optical element (12), the method comprising:

    - transmitting a light beam (100) through the focusing optical element (12) such that the light beam (100) is focused at a focal plane (1000) by the focusing optical element (12);
    - collecting the focused light beam (100) after the focal plane (1000) by a beam collection assembly (14) and detecting the collected light beam (100) by an image detector (16);
    - providing a scattering element (24) between the focusing optical element (12) and the beam collection assembly (14) such that the light beam (100) generates a scattered reference wave (26); and
    - collecting the focused light beam (100) and at least a part of the scattered reference wave (26) after the focal plane (1000) by the beam collection assembly (14) and detecting the collected light beam (100) and the collected reference wave (26) by the image detector (16), wherein the detected light beam (100) and the detected scattered reference wave (26) partly overlap with each other at the image detector (16);
    **characterized in that**
    - the scattering element (24) comprises or consists of a nanoparticle, and
    - the method comprises:

        - determining an influence of the focusing optical element (12) on a wave front of the transmitted light beam (100) based on the detected light beam (100) and the detected scattered reference wave (26).

2. Method according to claim 1, wherein the scattering element (24) is consecutively placed at different transversal positions of the light beam (100) and wherein the collected light beam (100) and at least the part of the scattered reference wave (26) are detected for each transversal position of the scattering element (24).

3. Method according to claim 1 or 2, wherein the scattering element (24) is arranged in the focal plane (1000) or within a longitudinal distance of $\pm 2$ mm from the focal plane (1000).

4. Method according to any one of the preceding claims, wherein the scattering element (24) is adapted such that the reference wave (26) generated by the light beam (100) essentially consists of predetermined orders of electric and/or magnetic multipole radiation, and/or
wherein the scattering element (24) is adapted such that the reference wave generated by the light beam (100) essentially corresponds to electric dipole radiation and optionally electric quadrupole radiation.

5. Method according to any one of the preceding claims, wherein the nanoparticle has a far-field emission of scattered light comprising or consisting of a predetermined and known dipole mode and/or a predetermined and known quadrupole mode.

6. Method according to any one of the preceding claims, wherein several different scattering elements (24) are used in consecutive measurements for generating the reference wave (26).

7. Method according to any one of the preceding claims, wherein collecting the focused light beam (100) and optionally at least the part of the scattered reference wave (26) comprises collimating the light beam (100) and optionally imaging the light beam to the image detector (16).

8. Method according to any one of the preceding claims, wherein the light beam (100) is provided with a predetermined polarization, and/or wherein the light beam (100) is provided in consecutive measurements with different predetermined polarizations.

9. Method according to any one of the preceding claims, wherein collecting and detecting the focused light beam (100) and at least a part of the scattered reference wave (26) is carried out such that a first region (104) of an image detected by the image detector (16) corresponds to an overlap of the light beam (100) and the reference wave (26) and a second region (106) of the image detected by the image detector (16) essentially corresponds only to a part of the reference wave (26).

10. Method according to claim 9, wherein determining the influence of the focusing optical element (12) on the wave front of the transmitted light beam (100) includes determining an intensity distribution of the first part (104) of the image detected by the image detector (16) and determining an intensity distribution of the second part (106) of the image detected by the image detector (16), and
wherein the method optionally further includes fitting a calculated far-field emission of multipole radiation to an intensity distribution of the second region of the image detected by the image detector (16) for characterizing the reference wave.

11. System (10) for characterizing a focusing optical element (12), the system (10) comprising:

- a beam collection assembly (14) for collecting a light beam (100) transmitted through and focused at a focal plane (1000) by the focusing optical element (12) to be characterized, wherein the beam collection assembly (14) is adapted to collect the focused light beam (100) after the focal plane (1000);
- a scattering element (24), wherein the scattering element (24) is arrangeable in the light beam (100) between the focusing optical element (12) and the beam collection assembly (14) such that the light beam (100) generates a scattered reference wave (26) and wherein the scattering element (24) is removable from the light beam (100); and
- an image detector (16) for detecting the collected light beam (100) and at least a part of the optionally generated scattered refence wave (26), wherein the detected scattered reference wave (26) and the light beam (100) partly overlap with each other at the image detector (16);
**characterized in that**
- the scattering element (24) comprises or consists of a nanoparticle, and

- the system (10) comprises:

- a computing unit which is adapted to determine an influence of the focusing optical element (12) on a wave front of the transmitted light beam (100) based on the detected light beam (100) and the detected partly overlapping scattered reference wave (26).

12. System (10) according to claim 11, wherein the beam collection assembly (14) comprises a collimating optical element (18) and optionally one or more imaging optical elements (22), and
wherein the collimating optical element (18) optionally is a microscope objective lens and optionally an immersion type microscope objective lens.

13. System (10) according to claim 12, wherein the collimating optical element (18) is chosen to have a larger numerical aperture than the focusing optical element (12) to be characterized.

14. System (10) according to any one of claims 11 to 13, wherein the image detector (16) essentially corresponds to a camera.

15. Use of a system (10) according to any one of claims 11 to 14 for characterizing a microscope objective lens.

**Patentansprüche**

1. Verfahren zum Charakterisieren eines fokussierenden optischen Elements (12), wobei das Verfahren Folgendes umfasst:

- Übertragen eines Lichtstrahls (100) durch das fokussierende optische Element (12), sodass der Lichtstrahl (100) durch das fokussierende optische Element (12) auf eine Brennebene (1000) fokussiert wird;
- Sammeln des fokussierten Lichtstrahls (100) hinter der Brennebene (1000) durch eine Strahlsammelbaugruppe (14) und Erfassen des gesammelten Lichtstrahls (100) durch einen Bilddetektor (16);
- Bereitstellen eines Streuelements (24) zwischen dem fokussierenden optischen Element (12) und der Strahlsammelbaugruppe (14), sodass der Lichtstrahl (100) eine gestreute Referenzwelle (26) erzeugt; und
- Sammeln des fokussierten Lichtstrahls (100) und zumindest eines Teils der gestreuten Referenzwelle (26) nach der Brennebene (1000) durch die Strahlsammelbaugruppe (14) und Erfassen des gesammelten Lichtstrahls (100) und der gesammelten Referenzwelle (26) durch den Bilddetektor (16), wobei sich der erfasste Lichtstrahl (100) und die erfasste gestreute Referenzwelle (26) an dem Bilddetektor (16) teilweise überlappen;
**dadurch gekennzeichnet, dass**
- das Streuelement (24) ein Nanopartikel umfasst oder aus einem solchen besteht, und
- das Verfahren Folgendes umfasst:

- Bestimmen eines Einflusses des fokussierenden optischen Elements (12) auf eine Wellenfront des übertragenen Lichtstrahls (100) basierend auf dem erfassten Lichtstrahl (100) und der erfassten gestreuten Referenzwelle (26).

2. Verfahren nach Anspruch 1, wobei das Streuelement (24) nacheinander an verschiedenen Querpositionen des Lichtstrahls (100) angeordnet wird und wobei der gesammelte Lichtstrahl (100) und zumindest der Teil der gestreuten Referenzwelle (26) für jede transversale Position des Streuelements (24) erfasst werden.

3. Verfahren nach Anspruch 1 oder 2, wobei das Streuelement (24) in der Brennebene (1000) oder in einem Längsabstand von $\pm 2$ mm von der Brennebene (1000) angeordnet ist.

4. Verfahren nach einem der vorhergehenden Ansprüche, wobei das Streuelement (24) so ausgelegt ist, dass die durch den Lichtstrahl (100) erzeugte Referenzwelle (26) im Wesentlichen aus vorgegebenen Ordnungen elektrischer und/oder magnetischer Multipolstrahlung besteht, und/oder
wobei das Streuelement (24) so ausgelegt ist, dass die durch den Lichtstrahl (100) erzeugte Referenzwelle im Wesentlichen elektrischer Dipolstrahlung und optional elektrischer Quadrupolstrahlung entspricht.

5. Verfahren nach einem der vorhergehenden Ansprüche, wobei das Nanopartikel eine Fernfeldemission von gestreutem Licht aufweist, die eine vorbestimmte und bekannte Dipolmode und/oder eine vorbestimmte und bekannte Quadrupolmode umfasst oder daraus besteht.

6. Verfahren nach einem der vorhergehenden Ansprüche, wobei mehrere unterschiedliche Streuelemente (24) in aufeinanderfolgenden Messungen zum Erzeugen der Referenzwelle (26) verwendet werden.

7. Verfahren nach einem der vorhergehenden Ansprüche, wobei das Sammeln des fokussierten Lichtstrahls (100) und optional zumindest des Teils der gestreuten Referenzwelle (26) Kollimieren des Lichtstrahls (100) und optional Abbilden des Lichtstrahls auf den Bilddetektor (16) umfasst.

8. Verfahren nach einem der vorhergehenden Ansprüche, wobei der Lichtstrahl (100) mit einer vorbestimmten Polarisation bereitgestellt wird, und/oder
wobei der Lichtstrahl (100) in aufeinanderfolgenden Messungen mit unterschiedlichen vorbestimmten Polarisationen bereitgestellt wird.

9. Verfahren nach einem der vorhergehenden Ansprüche, wobei das Sammeln und Erfassen des fokussierten Lichtstrahls (100) und zumindest eines Teils der gestreuten Referenzwelle (26) derart erfolgt, dass ein erster Bereich (104) eines von dem Bilddetektor (16) erfassten Bildes einer Überlappung des Lichtstrahls (100) und der Referenzwelle (26) entspricht und ein zweiter Bereich (106) des von dem Bilddetektor (16) erfassten Bildes im Wesentlichen nur einem Teil der Referenzwelle (26) entspricht.

10. Verfahren nach Anspruch 9, wobei das Bestimmen des Einflusses des fokussierenden optischen Elements (12) auf die Wellenfront des übertragenen Lichtstrahls (100) Bestimmen einer Intensitätsverteilung des ersten Teils (104) des von dem Bilddetektor (16) erfassten Bildes und Bestimmen einer Intensitätsverteilung des zweiten Teils (106) des von dem Bilddetektor (16) erfassten Bildes umfasst, und wobei das Verfahren optional ferner Anpassen einer berechneten Fernfeldemission von Multipolstrahlung an eine Intensitätsverteilung des zweiten Bereichs des von dem Bilddetektor (16) erfassten Bildes zum Charakterisieren der Referenzwelle beinhaltet.

11. System (10) zum Charakterisieren eines fokussierenden optischen Elements (12), wobei das System (10) Folgendes umfasst:

- eine Strahlsammelbaugruppe (14) zum Sammeln eines Lichtstrahls (100), der durch das zu charakterisierende fokussierende optische Element (12) durch eine Brennebene (1000) übertragen und auf diese fokussiert wird, wobei die Strahlsammelbaugruppe (14) dazu ausgelegt ist, den fokussierten Lichtstrahl (100) nach der Brennebene (1000) zu sammeln;
- ein Streuelement (24), wobei das Streuelement (24) in dem Lichtstrahl (100) zwischen dem fokussierenden optischen Element (12) und der Strahlsammelbaugruppe (14) anordenbar ist, sodass der Lichtstrahl (100) eine gestreute Referenzwelle (26) erzeugt, und wobei das Streuelement (24) aus dem Lichtstrahl (100) entfernt werden kann; und
- einen Bilddetektor (16) zum Erfassen des gesammelten Lichtstrahls (100) und zumindest eines Teils der optional erzeugten gestreuten Referenzwelle (26), wobei sich die erfasste gestreute Referenzwelle (26) und der Lichtstrahl (100) an dem Bilddetektor (16) teilweise überlappen;
**dadurch gekennzeichnet, dass**
- das Streuelement (24) ein Nanopartikel umfasst oder aus einem solchen besteht, und
- das System (10) Folgendes umfasst:

- eine Recheneinheit, die dazu ausgelegt ist, den Einfluss des fokussierenden optischen Elements (12) auf eine Wellenfront des übertragenen Lichtstrahls (100) basierend auf dem erfassten Lichtstrahl (100) und der erfassten, teilweise überlappenden gestreuten Referenzwelle (26) zu bestimmen.

12. System (10) nach Anspruch 11, wobei die Strahlsammelbaugruppe (14) ein optisches Kollimationselement (18) und optional ein oder mehrere optische Abbildungselemente (22) umfasst, und
wobei das optische Kollimationselement (18) optional ein Mikroskopobjektiv und optional ein Mikroskopobjektiv vom Immersionstyp ist.

13. System (10) nach Anspruch 12, wobei das optische Kollimationselement (18) so gewählt ist, dass es eine größere numerische Apertur aufweist als das zu charakterisierende fokussierende optische Element (12).

14. System (10) nach einem der Ansprüche 11 bis 13, wobei der Bilddetektor (16) im Wesentlichen einer Kamera entspricht.

15. Verwendung eines Systems (10) nach einem der Ansprüche 11 bis 14 zum Charakterisieren eines Mikroskopobjektivs.

**Revendications**

1. Procédé de caractérisation d'un élément optique de focalisation (12), le procédé comprenant :

- la transmission d'un faisceau lumineux (100) à travers l'élément optique de focalisation (12) de sorte que le faisceau lumineux (100) soit focalisé au niveau d'un plan focal (1000) par l'élément optique de focalisation (12) ;
- la collecte du faisceau lumineux (100) focalisé après le plan focal (1000) par un ensemble de collecte de faisceau (14) et la détection du faisceau lumineux (100) collecté par un détecteur d'image (16) ;
- la fourniture d'un élément de diffusion (24) entre l'élément optique de focalisation (12) et l'ensemble de collecte de faisceau (14) de sorte que le faisceau lumineux (100) génère une onde de référence (26) diffusée ; et
- la collecte du faisceau lumineux (100) focalisé et d'au moins une partie de l'onde de référence (26) diffusée après le plan focal (1000) par l'ensemble de collecte de faisceau (14) et la détection du faisceau lumineux (100) collecté et de l'onde de référence (26) collectée par le détecteur d'image (16), dans lequel le faisceau lumineux (100) détecté et l'onde de référence (26) diffusée détectée se chevauchent partiellement l'un avec l'autre au niveau du détecteur d'image (16) ;
**caractérisé en ce que**
- l'élément de diffusion (24) comprend ou est constitué d'une nanoparticule, et
- le procédé comprend :

- la détermination d'une influence de l'élément optique de focalisation (12) sur un front d'onde du faisceau lumineux (100) transmis sur la base du faisceau lumineux (100) détecté et de l'onde de référence (26) diffusée détectée.

2. Procédé selon la revendication 1, dans lequel l'élément de diffusion (24) est placé consécutivement au niveau de différentes positions transversales du faisceau lumineux (100) et dans lequel le faisceau lumineux (100) collecté et au moins la partie de l'onde de référence (26) diffusée sont détectés pour chaque position transversale de l'élément de diffusion (24).

3. Procédé selon la revendication 1 ou 2, dans lequel l'élément de diffusion (24) est disposé dans le plan focal (1000) ou à une distance longitudinale de $\pm 2$ mm du plan focal (1000).

4. Procédé selon l'une quelconque des revendications précédentes, dans lequel l'élément de diffusion (24) est conçu de sorte que l'onde de référence (26) générée par le faisceau lumineux (100) soit essentiellement constituée d'ordres prédéterminés de rayonnement multipolaire électrique et/ou magnétique, et/ou
dans lequel l'élément de diffusion (24) est conçu de sorte que l'onde de référence générée par le faisceau lumineux (100) corresponde essentiellement à un rayonnement dipolaire électrique et optionnellement à un rayonnement quadripolaire électrique.

5. Procédé selon l'une quelconque des revendications précédentes, dans lequel la nanoparticule présente une émission en champ lointain de lumière diffusée comprenant ou constituée d'un mode dipolaire prédéterminé et connu et/ou d'un mode quadripolaire prédéterminé et connu.

6. Procédé selon l'une quelconque des revendications précédentes, dans lequel plusieurs éléments de diffusion (24) différents sont utilisés dans des mesures consécutives afin de générer l'onde de référence (26).

7. Procédé selon l'une quelconque des revendications précédentes, dans lequel la collecte du faisceau lumineux (100) focalisé et optionnellement d'au moins la partie de l'onde de référence (26) diffusée comprend la collimation du faisceau lumineux (100) et optionnellement l'imagerie du faisceau lumineux vers le détecteur d'image (16).

8. Procédé selon l'une quelconque des revendications précédentes, dans lequel le faisceau lumineux (100) est pourvu d'une polarisation prédéterminée, et/ou dans lequel le faisceau lumineux (100) est pourvu de mesures consécutives avec des polarisations prédéterminées différentes.

9. Procédé selon l'une quelconque des revendications précédentes, dans lequel la collecte et la détection du faisceau lumineux (100) focalisé et d'au moins une partie de l'onde de référence (26) diffusée sont effectuées de sorte qu'une première région (104) d'une image détectée par le détecteur d'image (16) corresponde à un chevauchement du faisceau lumineux (100) et de l'onde de référence (26) et qu'une seconde région (106) de l'image détectée par le détecteur d'image (16) correspond essentiellement uniquement à une partie de l'onde de référence (26).

10. Procédé selon la revendication 9, dans lequel la détermination de l'influence de l'élément optique de focalisation (12) sur le front d'onde du faisceau lumineux (100) transmis comporte la détermination d'une distribution d'intensité de la première partie (104) de l'image détectée par le détecteur d'image (16) et la détermination d'une distribution d'intensité de la seconde partie (106) de l'image détectée par le détecteur d'image (16), et dans lequel le procédé comporte en outre optionnellement l'ajustement d'une émission en champ lointain calculée de rayonnement multipolaire à une distribution d'intensité de la seconde région de l'image détectée par le détecteur d'image (16) afin de caractériser l'onde de référence.

11. Système (10) de caractérisation d'un élément optique de focalisation (12), le système (10) comprenant :

   - un ensemble de collecte de faisceau (14) destiné à collecter un faisceau lumineux (100) transmis à travers et focalisé au niveau d'un plan focal (1000) par l'élément optique de focalisation (12) à caractériser, dans lequel l'ensemble de collecte de faisceau (14) est conçu pour collecter le faisceau lumineux (100) focalisé après le plan focal (1000) ;
   - un élément de diffusion (24), dans lequel l'élément de diffusion (24) peut être disposé dans le faisceau lumineux (100) entre l'élément optique de focalisation (12) et l'ensemble de collecte de faisceau (14) de sorte que le faisceau lumineux (100) génère une onde de référence (26) diffusée et dans lequel l'élément de diffusion (24) peut être retiré du faisceau lumineux (100) ; et
   - un détecteur d'image (16) destiné à détecter le faisceau lumineux (100) collecté et au moins une partie de l'onde de référence (26) diffusée optionnellement générée, dans lequel l'onde de référence (26) diffusée détecté et le faisceau lumineux (100) se chevauchent partiellement l'un avec l'autre au niveau du détecteur d'image (16) ;
   **caractérisé en ce que**
   - l'élément de diffusion (24) comprend ou est constitué d'une nanoparticule, et
   - le système (10) comprend :

      - une unité de calcul qui est conçue pour déterminer une influence de l'élément optique de focalisation (12) sur un front d'onde du faisceau lumineux (100) transmis sur la base du faisceau lumineux (100) détecté et de l'onde de référence (26) diffusée détectée qui se chevauchent partiellement.

12. Système (10) selon la revendication 11, dans lequel l'ensemble de collecte de faisceau (14) comprend un élément optique de collimation (18) et optionnellement un ou plusieurs éléments optiques d'imagerie (22), et dans lequel l'élément optique de collimation (18) est optionnellement un objectif de microscope et optionnellement un objectif de microscope de type à immersion.

13. Système (10) selon la revendication 12, dans lequel l'élément optique de collimation (18) est choisi pour avoir une ouverture numérique plus grande que l'élément optique de focalisation (12) à caractériser.

14. Système (10) selon l'une quelconque des revendications 11 à 13, dans lequel le détecteur d'image (16) correspond essentiellement à une caméra.

15. Utilisation d'un système (10) selon l'une quelconque des revendications 11 à 14 pour caractériser un objectif de microscope.

**Fig. 1**

EP 4 291 865 B1

# Fig. 2A

# Fig. 2B

17

# Fig. 3

(a)

(b)

(c)

(d)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018299782 A1

- US 6111646 A

**Non-patent literature cited in the description**

- **P. TÖRÖK et al.** Optical Imaging and Microscopy. Springer-Verlag, 2007